# EUROPÄISCHE PATENTSCHRIFT

(11) **EP 3 252 091 B1**
(45) Veröffentlichungstag und Bekanntmachung des Hinweises auf die Patenterteilung: **13.03.2024**
(21) Anmeldenummer: 16172038.8
(22) Anmeldetag: 30.05.2016
(51) Int. Cl.: C08G 59/50

(54) **TETRAHYDROFURAN-DIAMIN**
TETRAHYDROFURAN DIAMINE
TÉTRAHYDROFURANE-DIAMINE

(43) Veröffentlichungstag der Anmeldung: 06.12.2017
(60) Teilanmeldung: 21200063.2
(73) Patentinhaber: Sika Technology AG, 6340 Baar (CH)
(72) Erfinder: Kasemi, Edis, 8046 Zürich (CH); Urban, Claus, 71640 Ludwigsburg (DE)
(74) Vertreter: Sika Patent Attorneys

(56) Entgegenhaltungen:
- WO-A1-2015/124792
- WO-A1-2016/023839
- WO-A1-2017/046292
- Walter Kretschmer: "BIOCORE BIOCOmmodity REfinery", , 31. August 2013 (2013-08-31), Seiten 1-104, XP055320820, Gefunden im Internet: URL:http://www.biocore-europe.org/file/D7. 7 Final report on SWOT analysis and biomass competition .pdf [gefunden am 2016-11-18]
- XIAODUN HE ET AL: "EVALUATION OF FURFURYLAMINES AS CURING AGENTS FOR EPOXY RESINS", JOURNAL OF POLYMER SCIENCE, POLYMER CHEMISTRY EDITION, INTERSCIENCE PUBLISHERS, NEW YORK, NY, US, Bd. 30, Nr. 4, 30. März 1992 (1992-03-30), Seiten 533-542, XP000258557, ISSN: 0360-6376
- DAVID R. HOLM ET AL: "Kinetics of the Liquid Phase Hydrogenation of Furan Amines", INDUSTRIAL & ENGINEERING CHEMISTRY RESEARCH, vol. 34, no. 10, 1 October 1995 (1995-10-01), pages 3392-3398, XP055492670, ISSN: 0888-5885, DOI: 10.1021/ie00037a026

## Beschreibung

### Technisches Gebiet

Die Erfindung betrifft das Gebiet der Amine, der Härter für Epoxidharze, Epoxidharz-Zusammensetzungen und deren Anwendung, insbesondere als Besch ichtu ng.

### Stand der Technik

Bei Raumtemperatur applizierte und aushärtende Epoxidharz-Produkte wie Klebstoffe, Verankerungen oder Beschichtungen werden meist mit Amingruppen-haltigen Härtern ausgehärtet. Die in den Härtern enthaltenden Amine sind grösstenteils empfindlich auf Carbamatisierung, d.h. Salzbildung mit CO₂ aus der Luft, was insbesondere bei der Aushärtung von Epoxidharz-Beschichtungen bei kalten und feuchten Umgebungsbedingungen wie beispielsweise 8 °C und 80 % relativer Luftfeuchtigkeit zu sogenannten Blushing-Effekten wie Trübungen, Flecken, Mattheit, Rauheit oder Klebrigkeit der Oberfläche führen kann. Zudem sind sie oft geruchsintensiv. Aufgrund dieser Nachteile werden die Amine zum Erreichen ausreichend guter Verarbeitungs- und Aushärtungseigenschaften in den Epoxidharz-Produkten typischerweise mit Epoxiden voradduktiert und mit Verdünnern versetzt. Dies führt wiederum verstärkt zu Emissionen und Schwund, da die Verdünner chemisch nicht an das bei der Aushärtung des Epoxidharzes entstehende Polymer angebunden werden und daher ausgasen. Es besteht deshalb ein Bedarf nach alternativen Aminen, die weniger stark riechen und weniger zu Carbamatisierung und Blushing-Effekten neigen. Ausserdem besteht ein genereller Wunsch nach chemischen Bausteinen, die aus nachwachsenden anstelle von fossilen Rohstoffen gewonnen werden können und damit dazu beitragen, die damit hergestellten Produkte nachhaltiger zu machen.

Unter den vorgeschlagenen nachhaltigeren Aminen aus nachwachsenden Rohstoffen sind Furanamine, die sich ausgehend von aus Zuckern bzw. Stärken gewonnenen Bausteinen aufbauen lassen.

WO 2015/124792 beschreibt aus Furanaminen aufgebaute Polyamine, welche geruchsarm sind, vergleichsweise wenig zu Carbamatisierung neigen und beim Aushärten von Epoxidharzen gute Endfestigkeiten erreichen. Die beschriebenen Polyamine sind aber dunkelfarbig und unter Lichteinfluss wenig farbstabil. Damit erhaltene Epoxidharz-Produkte vergilben deshalb stark. Ausserdem zeigen sie Einschränkungen in der Benetzung von gewissen Substraten und Aushärtungsstörungen bei der Härtung unter kühl-feuchten Bedingungen, was zu Problemen mit der Haftung und zu unvollständiger Härtung mit geringer Endfestigkeit und matter, klebriger Oberfläche führen kann.

Die Publikation von Holm, D.R. et al.: "Kinetics of the Liquid Phase Hydrogenation of Furan Amines", INDUSTRIAL & ENGINEERING CHEMISTRY RESEARCH, vol. 34, no. 10, 1995, Seiten 3392 - 3398, beschreibt die katalytische Hydrierung von 5,5'-Ethylidendifurfurylamin zu 5,5'-Ethylidenditetrahydrofurfurylamin.

### Darstellung der Erfindung

Aufgabe der Erfindung ist es, ein Amin zur Verfügung zu stellen, welches geruchsarm, hellfarbig, niedrigviskos und wenig empflindlich auf Carbamatisierung ist und sich als Bestandteil von Härtern für Epoxidharze eignet, welche die Nachteile des Standes der Technik überwinden.

Diese Aufgabe wird mit dem Reaktionsprodukt aus der Hydrierung von mindestens einem Amin der Formel (II) wie in Anspruch 1 beschrieben gelöst. Es ist hellfarbig, farbstabil, weist nur einen geringen Geruch auf und neigt wenig zu Carbamatisierung. Es ermöglicht Epoxidharz-Produkte, welche mit wenig oder ganz ohne Verdünner auskommen und trotzdem dünnflüssig sind. Solche Epoxidharz-Produkte sind geruchs- und emissionsarm, gut verarbeitbar, benetzen die Substrate gut und härten schnell und störungsfrei aus. Insbesondere zeigen sie auch bei kühlen Umgebungstemperaturen kaum Blushing-bedingte Fehler. Bei der Aushärtung bilden sie qualitativ hochstehende Epoxidharz-Produkte mit hoher Härte und ebenmässiger, nichtklebriger und glänzender Oberfläche, welche auch unter dem Einfluss von Licht oder UV-Strahlung kaum vergilben.

Das Reaktionsprodukt aus der Hydrierung von mindestens einem Amin der Formel (II) ist in einem einfachen Verfahren ausgehend von Furfurylamin herstellbar, welches seinerseits aus nachwachsenden Rohstoffen wie Zucker bzw. Stärke gewonnenen Bausteinen hergestellbar ist.

Überraschenderweise erfolgt die Aushärtung von Epoxidharzen mit dem Reaktionsprodukt aus der Hydrierung von mindestens einem Amin der Formel (II) bei Raumtemperatur ähnlich schnell und störungsfrei wie mit dem unhydrierten Amin der Formel (II), wohingegen die Aushärtung bei 8 °C und 80 % relativer Luftfeuchtigkeit ebenfalls schnell und weitgehend störungsfrei abläuft, während mit dem unhydrierten Amin der Formel (II) in der Kälte eine unvollständige Aushärtung mit geringer Endhärte und klebriger Oberfläche beobachtet wird und dabei auch durch späteres Erwärmen kaum eine Nachhärtung erfolgt. Die verbesserte Aushärtung in der Kälte nach der Hydrierung ist besonders überraschend, zeigt doch die Erfahrung, dass arylaliphatische Amine mit Epoxidharzen typischerweise schneller und störungsfreier aushärten als entsprechende hydrierte, aliphatische Amine, und zwar bei Raumtemperatur und insbesondere auch in der Kälte. Auch die erhöhte Hydrophilie des Tetrahydrofuranrings gegenüber dem Furanring würde eher eine verstärkte Neigung zu Carbamatisierung erwarten lassen, und die erhöhte Sterik und Flexibilität des Tetrahydrofuranrings würde eine reduzierte Härte im damit ausgehärteten Produkt erwarten lassen. Weiterhin überraschend ist, dass Epoxidharz-Zusammensetzungen enthaltend das Reaktionsprodukt aus der Hydrierung von mindestens einem Amin der Formel (II) silikatische Untergründe wie insbesondere Glas deutlich besser benetzen als solche basierend auf dem entsprechende Amin der Formel (II). Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Reaktionsprodukt aus der Hydrierung von mindestens einem Amin der Formel (II) 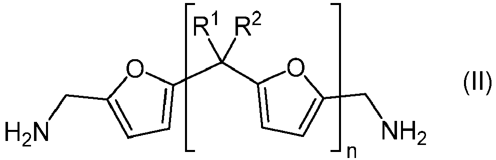 enthaltend ein ein Amin der Formel (I), 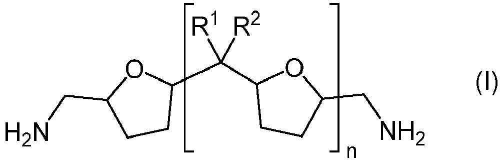 wobei
R¹ und R² entweder
   beide für einen Wasserstoff-Rest,
   oder unabhängig voneinander jeweils für einen Alkyl-Rest mit 1 bis 8 C-Atomen, oder zusammen für einen Alkylen-Rest mit 4 oder 5 C-Atomen, welcher zusammen mit dem C-Atom, an welches R¹ und R² gebunden sind, einen Cyclopentyl- oder Cyclohexyl-Rest bilden,
stehen, und
n für 1 oder 2 oder 3 steht, wobei das Reaktionsprodukt einen Gehalt an Amin der Formel (I) von 60 bis 85 Gewichts-% aufweist.

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.

Als "Aminwasserstoff" werden die Wasserstoffatome von primären und sekundären Aminogruppen bezeichnet.

Als "Aminwasserstoff-Equivalentgewicht" wird die Masse eines Amins oder einer Amin-haltigen Zusammensetzung, die ein Molequivalent Aminwasserstoff enthält, bezeichnet.

Als "Verdünner" wird eine in einem Epoxidharz lösliche und dessen Viskosität senkende Substanz bezeichnet, welche bei der Aushärtung chemisch nicht in das Epoxid-Polymer eingebunden wird.

Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in der Beschreibung bzw. den Ausführungsbeispielen beschrieben bestimmt wird.

Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird.

Als "Raumtemperatur" wird eine Temperatur von 23 °C bezeichnet.

Bevorzugt stehen R¹ und R² jeweils für den gleichen Rest oder zusammen für einen linearen Pentylen-Rest.

Besonders bevorzugt stehen R¹ und R² entweder beide für einen Wasserstoff-Rest oder beide für einen Methyl-Rest.

Am meisten bevorzugt stehen R¹ und R² jeweils für einen Methyl-Rest.

Ein solches Amin der Formel (I) ist besonders einfach herstellbar und weist in der Verwendung als Bestandteil eines Härters für Epoxidharze besonders gute Eigenschaften auf.

Bevorzugt steht n für 1 oder 2.

Besonders bevorzugt steht n für 1.

Ein solches Amin der Formel (I) ermöglicht besonders niedrigviskose Epoxidharz-Zusammensetzungen.

Am meisten bevorzugt ist ein Amin der Formel (I), bei welchem R¹ und R² jeweils für einen Methyl-Rest stehen und n für 1 steht. Dieses Amin wird auch als 2,2-Bis(5-aminomethyltetrahydrofuran-2-yl)propan bezeichnet.

Das Amin der Formel (I) wird erhalten aus der Hydrierung von mindestens einem Amin der Formel (II).

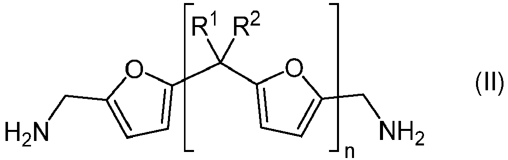

In der Formel (II) weisen R¹, R² und n die bereits genannten Bedeutungen auf.

Das Amin der Formel (I) wird als Bestandteil eines Reaktionsprodukts aus der Hydrierung von mindestens einem Amin der Formel (II) verwendet. Ein solches Reaktionsprodukt ist geruchsarm, hellfarbig, niedrigviskos und besonders einfach zugänglich. Es zeigt auch ohne aufwändige Reinigung hervorragende Eigenschaften bei der Verwendung als Bestandteil eines Härters für Epoxidharze.

Ein Gegenstand der Erfindung ist somit ein Reaktionsprodukt aus der Hydrierung von mindestens einem Amin der Formel (II) enthaltend das Amin der Formel (I).

Die Hydrierung kann direkt mit molekularem Wasserstoff oder indirekt durch Wasserstoff-Transfer von anderen Reagentien erfolgen. Bevorzugt erfolgt die Hydrierung mit molekularem Wasserstoff.

Die Hydrierung wird bevorzugt unter Einsatz eines Hydrierungskatalysators durchgeführt. Als Hydrierungskatalysator bevorzugt ist Raney-Nickel, Rhodium oder Ruthenium.

Bevorzugt wird bei einer Temperatur von 130 °C oder weniger, insbesondere bei einer Temperatur von 80 bis 120 °C, und einem Wasserstoff-Druck von 10 bis 250 bar, insbesondere 50 bis 200 bar, gearbeitet.

Die Hydrierung kann lösemittelfrei oder in einem Lösemittel durchgeführt werden. Als Lösemittel bevorzugt ist ein Alkohol, insbesondere Ethanol oder Isopropanol.

Ein gegebenenfalls vorhandenes Lösemittel wird nach der Hydrierung bevorzugt aus dem Reaktionsprodukt entfernt, insbesondere mittels Destillation.

Die Bedingungen bei der Hydrierung werden bevorzugt so gewählt, dass das Reaktionsprodukt weitgehend frei von Amin der Formel (II) ist.

Das Reaktionsprodukt weist bevorzugt einen Gehalt an Amin der Formel (II) von höchstens 5 Gewichts-%, bevorzugt höchstens 2 Gewichts-%, insbesondere höchstens 1 Gewichts-%, auf. Ein solches Reaktionsprodukt ist von hellem Farbton, neigt kaum zum Vergilben und ermöglicht besonders farbstabile Epoxidharz-Zusammensetzungen.

Das Reaktionsprodukt weist einen Gehalt an Amin der Formel (I) von 60 bis 85 Gewichts-% auf.

Ein solches Reaktionsprodukt härtet zusammen mit Epoxidharzen auch bei kühlen Umgebungsbedingungen unterhalb von 15 °C, insbesondere auch bei 8 °C und 80 % relativer Luftfeuchtigkeit, schnell und weitgehend störungsfrei zu einem Film von hoher Härte aus, welcher kaum Blushing-bedingte Defekte zeigt.

Die weiteren Bestandteile des Reaktionsprodukts bestehen typischerweise vorwiegend aus unvollständig hydriertem Amin der Formel (II), insbesondere Amin der Formel (la).

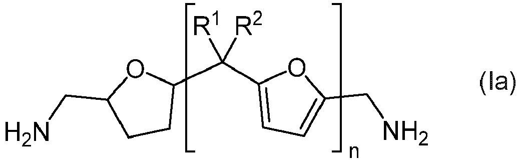

In der Formel (la) weisen R¹, R² und n die bereits genannten Bedeutungen auf.

Bevorzugt weist das Reaktionsprodukt einen Gehalt an Amin der Formel (la) von höchstens 40, Gewichts-% auf. Besonders bevorzugt enthält es 15 bis 40 Gewichts-% Amin der Formel (la). Ein solches Reaktionsprodukt zeigt besonders gute Eigenschaften bei der Verwendung als Härter für Epoxidharze.

Das Reaktionsprodukt aus der Hydrierung des Amins der Formel (II) kann mittels Destillation gereinigt werden. Dabei ist es allerdings schwierig, das Amin der Formel (I) und unvollständig hydrierte Produkte, wie insbesondere Amin der Formel (Ia), mittels Destillation voneinander zu trennen. Zudem hat es sich gezeigt, dass das mittels Destillation gereinigte Reaktionsprodukt zwar farblich noch etwas heller ist, es bei der Aushärtung in der Kälte aber überraschenderweise Nachteile bei der Empfindlichkeit gegenüber Wasser zeigt.

Bevorzugt wird das Reaktionsprodukt somit abgesehen von Abdestillieren der leichtflüchtigen Anteile, wie insbesondere gegebenenfalls vorhandenem Lösemittel, nicht gereinigt.

Ein für die Herstellung des Amins der Formel (I) - oder des Reaktionsprodukts enthaltend dieses - geeignetes Amin der Formel (II) ist seinerseits herstellbar aus Bausteinen, die auf nachwachsenden Rohstoffen basieren. Es ist insbesondere erhältlich nach bekannten Verfahren aus der Umsetzung von Furfurylamin mit mindestens einem Aldehyd oder Keton der Formel 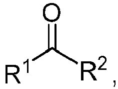 wobei R¹ und R² die bereits genannten Bedeutungen aufweisen.

Dabei kann Furfurylamin nach bekannten Verfahren ausgehend von aus Zuckern bzw. Stärken gewonnenen Bausteinen hergestellt werden.

Als Aldehyd oder Keton geeignet ist Formaldehyd, Aceton, Methylethylketon, Methylisobutylketon, Cyclopentanon oder Cyclohexanon.

Besonders geeignet ist Formaldehyd, Aceton oder Cyclohexanon.

Am meisten geeignet ist Aceton.

Ein weiterer Gegenstand der Erfindung ist ein Umsetzungsprodukt vom Reaktionsprodukt aus der Hydrierung von mindestens einem Amin der Formel (II) mit einem Epoxid. Dieses Umsetzungsprodukt wird im Folgenden als "Addukt" und die entsprechende Umsetzung als "Adduktierung" bezeichnet. Dabei wird die Adduktierung bei einem Überschuss an Aminogruppen gegenüber Epoxidgruppen durchgeführt, so dass alle Epoxidgruppen umgesetzt werden und das erhaltene Addukt gegenüber Epoxidgruppen reaktive Aminwasserstoffe aufweist. Dabei bleiben typischerweise Anteile von nicht adduktiertem Amin der Formel (I) im Reaktionsgemisch, welche gegebenenfalls entfernt werden können.

Ein solches Addukt weist für die Verwendung als Bestandteil eines Härters für Epoxidharze vorteilhafte Eigenschaften wie insbesondere eine schnellere Aushärtung und eine noch geringere Neigung zu Carbamaisierung auf.

Bevorzugt wird die Adduktierung bei einer Temperatur im Bereich von 40 bis 120 °C, insbesondere 60 bis 100 °C, durchgeführt.

Ein für die Adduktierung geeignetes Epoxid ist insbesondere ein Monoepoxid, insbesondere ein Monoglycidylether, bevorzugt Butylglycidylether, Fettalkoholglycidylether, Phenylglycidylether oder Kresylglycidylether. Besonders bevorzugt ist ortho-Kresylglycidylether, insbesondere ein kommerziell verfügbarer Kresylglycidylether wie insbesondere Araldite^{®} DY-K (von Huntsman), Polypox^{™} R6 (von Dow), Heloxy^{™} KR (von Momentive) oder Erisys^{®} GE-10 (von CVC Spec. Chem.).

Mit einem Monoepoxid wird der Amin-Überschuss insbesondere so gewählt, dass das Molverhältnis zwischen der Summe aus dem Amin der Formel (I) und gegebenenfalls vorhandenem Amin der Formel (la) und dem Monoepoxid im Bereich von 0.8:1 bis 20:1, insbesondere 0.9:1 bis 10:1, liegt.

Ein für die Adduktierung geeignetes Epoxid ist weiterhin insbesondere ein Diepoxid, insbesondere ein Flüssigharz mit Glycidylether-Gruppen, bevorzugt ein Bisphenol-A-, -F- oder -A/F-Diglycidylether, insbesondere ein kommerziell verfügbares Flüssigharz wie insbesondere Araldite^{®} GY 240, Araldite^{®} GY 250, Araldite^{®} GY 281, Araldite^{®} GY 282, Araldite^{®} GY 285, Araldite^{®} PY 304 oder Araldite^{®} PY 720 (alle von Huntsman), oder D.E.R. ^{®} 330, D.E.R. ^{®} 331, D.E.R. ^{®} 332, D.E.R. ^{®} 336, D.E.R. ^{®} 351, D.E.R. ^{®} 352, D.E.R. ^{®} 354 oder D.E.R. ^{®} 356 (alle von Dow).

Mit einem Diepoxid wird der Amin-Überschuss insbesondere so gewählt, dass das Addukt erhebliche Anteile von nicht adduktiertem Amin der Formel (I) und gegebenenfalls Amin der Formel (la) enthält. Ein solches Addukt ist noch ausreichend fliessfähig und ermöglicht eine besonders schnelle Aushärtung. Bevorzugt liegt das Molverhältnis zwischen der Summe aus dem Amin der Formel (I) und gegebenenfalls vorhandenem Amin der Formel (la) und den Epoxidgruppen des Diepoxids bei der Adduktierung im Bereich von 2:1 bis 50:1, insbesondere 5:1 bis 30:1.

Ein weiterer Gegenstand der Erfindung ist die Verwendung des Reaktionsprodukts aus der Hydrierung von mindestens einem Amin der Formel (II) und/oder des beschriebenen Addukts davon, als Bestandteil eines Härters für Epoxidharze.

In einem Härter für Epoxidharze wird das Reaktionsprodukt aus der Hydrierung von mindestens einem Amin der Formel (II) und/oder das Addukt bevorzugt in Kombination mit weiteren Aminen und/oder Beschleunigern eingesetzt.

Ein weiterer Gegenstand der Erfindung ist somit ein Härter für Epoxidharze enthaltend
- mindestens das beschriebene Reaktionsprodukt aus der Hydrierung von mindestens einem Amin der Formel (II) und/oder ein Addukt davon, wie beschrieben, und
- mindestens ein weiteres Amin, welches nicht der Formel (I) oder (la) entspricht und kein Addukt davon darstellt, und/oder mindestens einen Beschleuniger.

Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; tertiäre Amine wie insbesondere 1,4-Diazabicyclo[2.2.2]octan, Benzyldimethylamin, α-Methylbenzyldimethylamin, Triethanolamin, Dimethylaminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo[5.4.0]undec-7-en,

Guanidine wie insbesondere 1,1,3,3-Tetramethylguanidin, Phenole, insbesondere Bisphenole, Phenol-Harze oder Mannich-Basen wie insbesondere 2-(Dimethylaminomethyl)phenol, 2,4,6-Tris(dimethylaminomethyl)phenol oder Polymere aus Phenol, Formaldehyd und N,N-Dimethyl-1,3-propandiamin, Phosphite wie insbesondere Di- oder Triphenylphosphite, oder Mercaptogruppen aufweisende Verbindungen. Als Beschleuniger bevorzugt sind Säuren, tertiäre Amine oder Mannich-Basen.

Am meisten bevorzugt ist Salicylsäure oder 2,4,6-Tris(dimethylaminomethyl)-phenol oder eine Kombination davon.

Als weiteres Amin geeignet ist insbesondere ein Amin, welches mindestens zwei, insbesondere mindestens drei, Aminwasserstoffe aufweist, insbesondere die folgenden Amine:
- primäre Monoamine wie insbesondere Hexylamin, Benzylamin oder Furfurylamin;
- tertiäre Aminogruppen aufweisende primäre Amine wie insbesondere N,N-Dimethylaminopropylamin (DMAPA) oder N,N-Dimethyldipropylentriamin (DMAPAPA);
- aliphatische, cycloaliphatische oder arylaliphatische primäre Diamine, insbesondere 2,2-Dimethyl-1,3-propandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2(4),4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- oder 1,4-Diaminocyclohexan, Bis(4-aminocyclohexyl)methan (H₁₂-MDA), Bis(4-amino-3-methylcyclohexyl)methan, Bis(4-amino-3-ethylcyclohexyl)methan, Bis(4-amino-3,5-dimethylcyclohexyl)methan, Bis(4-amino-3-ethyl-5-methylcyclohexyl)methan, 1-Amino-3-aminomethyl-3,5,5-trimethylcyclohexan (Isophorondiamin oder IPDA), 2- oder 4-Methyl-1,3-diaminocyclohexan oder Mischungen davon, 1,3-Bis(aminomethyl)cyclohexan, 1,4-Bis(aminomethyl)cyclohexan, 2,5(2,6)-Bis(aminomethyl)bicyclo[2.2.1]heptan (NBDA), 3(4),8(9)-Bis(aminomethyl)tricyclo-[5.2.1.0^{2,6}]decan, 1,4-Diamino-2,2,6-trimethylcyclohexan (TMCDA), 1,8-Menthandiamin, 3,9-Bis(3-aminopropyl)-2,4,8,10-tetraoxaspiro[5.5]undecan, 1,3-Bis(aminomethyl)benzol (MXDA), 1,4-Bis(aminomethyl)benzol, 2,5-Bis(aminomethyl)furan oder 2,5-Bis(aminomethyl)tetrahydrofuran,
- aliphatische, cycloaliphatische oder arylaliphatische primäre Triamine, insbesondere 4-Aminomethyl-1,8-octandiamin, 1,3,5-Tris(aminomethyl)benzol, 1,3,5-Tris(aminomethyl)cyclohexan, Tris(2-aminoethyl)amin, Tris(2-amino-propyl)amin oder Tris(3-aminopropyl)amin;
- Ethergruppen-haltige aliphatische oder cycloaliphatische primäre Di- oder Triamine, insbesondere 4,9-Dioxadodecan-1,12-diamin, 5,8-Dioxadodecan-3,10-diamin, 4,7,10-Trioxatridecan-1,13-diamin oder höhere Oligomere dieser Diamine, 3,9-Bis(3-aminopropyl)-2,4,8,10-tetraoxaspiro[5.5]undecan, Bis(3-aminopropyl)polytetrahydrofurane oder andere Polytetrahydrofurandiamine, cycloaliphatische Ethergruppen-haltige Diamine aus der Propoxylierung und nachfolgenden Aminierung von 1,4-Dimethylolcyclohexan, erhältlich insbesondere als Jeffamine^{®} RFD-270 (von Huntsman), oder Polyoxyalkylendi- oder -triamine, welche typischerweise Produkte aus der Aminierung von Polyoxyalkylendi- oder -triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylendi- oder -triamine sind Jeffamine^{®} D-230, Jeffamine^{®} D-400, Jeffamine^{®} EDR-104, Jeffamine^{®} EDR-148, Jeffamine^{®} EDR-176 oder Jeffamine^{®} T-403, oder entsprechende Amine von BASF oder Nitroil;
- sekundäre Aminogruppen aufweisende Polyamine mit zwei primären aliphatischen Aminogruppen, wie insbesondere 3-(2-Aminoethyl)aminopropylamin, Bis(hexamethylen)triamin (BHMT), Diethylentriamin (DETA), Triethylentetramin (TETA), Tetraethylenpentamin (TEPA), Pentaethylenhexamin (PEHA) oder höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin oder N,N'-Bis(3-amino-1-ethylpropyl)-2-methyl-1,5-pentandiamin;
- Polyamine mit ein oder zwei sekundären Aminogruppen, insbesondere Produkte aus der reduktiven Alkylierung von primären aliphatischen Polyaminen mit monofunktionellen Aldehyden oder Ketonen, insbesondere N-Benzyl-1,3-bis(aminomethyl)benzol, N,N'-Dibenzyl-1,3-bis(aminomethyl)benzol, N-2-Ethylhexyl-1,3-bis(aminomethyl)benzol, N,N'-Bis(2-ethylhexyl)-1,3-bis(aminomethyl)benzol, N-Benzyl-1,2-propandiamin, N,N'-Dibenzyl-1,2-propandiamin, N-(4-Methoxybenzyl)-1,2-propandiamin, N-(4-(Dimethylamino)benzyl)-1,2-propandiamin, N-(1-Phenylethyl)-1,2-propandiamin, N-Benzyl-1,2-ethandiamin, N,N'-Dibenzyl-1,2-ethandiamin, oder partiell styrolisierte Polyamine wie zum Beispiel styrolisiertes MXDA (erhältlich als Gaskamine^{®} 240 von Mitsubishi Gas Chemical);
- aromatische Polyamine, wie insbesondere m- und p-Phenylendiamin, 4,4'-, 2,4' und/oder 2,2'-Diaminodiphenylmethan, 3,3'-Dichloro-4,4'-diaminodiphenylmethan (MOCA), 2,4- und/oder 2,6-Toluylendiamin, Mischungen von 3,5-Dimethylthio-2,4- und -2,6-toluylendiamin (erhältlich als Ethacure^{®} 300 von Albermarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis(4-aminobenzoat), 1,4-Butylen-bis(4-aminobenzoat), Polytetramethylenoxid-bis(4-aminobenzoat) (erhältlich als Versalink^{®} von Air Products), 1,2-Bis(2-aminophenylthio)ethan, 2-Methylpropyl-(4-chloro-3,5-diaminobenzoat) oder tert.Butyl-(4-chloro-3,5-diaminobenzoat);
- Addukte von Polyaminen, insbesondere von primären Diaminen wie insbesondere IPDA, MXDA, MPMD, 1,2-Propandiamin oder 1,2-Ethandiamin, mit einem Epoxidharz, insbesondere einem Flüssigharz, bevorzugt einem Bisphenol-A- oder Bisphenol-F-Diglycidylether, oder mit einem Monoepoxid, insbesondere einem Monoglycidylether, bevorzugt Butylglycidylether, Fettalkoholglycidylether, Phenylglycidylether oder Kresylglycidylether, oder Umsetzungsprodukte aus Polyaminen und Epichlorhydrin, insbesondere jenes von 1,3-Bis(aminomethyl)benzol, kommerziell erhältlich als Gaskamine^{®} 328 (von Mitsubishi Gas Chemical);
- Polyamidoamine, insbesondere Umsetzungsprodukte aus einer ein- oder mehrwertigen Carbonsäure, beziehungsweise deren Ester oder Anhydride, insbesondere einer Dimerfettsäure, mit einem im stöchiometrischen Überschuss eingesetzten aliphatischen, cycloaliphatischen oder aromatischen Polyamin, insbesondere einem Polyalkylenamin wie beispielsweise DETA oder TETA, insbesondere die kommerziell erhältlichen Polyamidoamine Versamid^{®} 100, 125, 140 oder 150 (von Cognis), Aradur^{®} 223, 250 oder 848 (von Huntsman), Euretek^{®} 3607 oder 530 (von Huntsman) oder Beckopox^{®} EH 651, EH 654, EH 655, EH 661 oder EH 663 (von Cytec); oder
- Phenalkamine, auch Mannich-Basen genannt, insbesondere Umsetzungsprodukte aus einer Mannich-Reaktion von Phenolen, insbesondere Cardanol, mit Aldehyden, insbesondere Formaldehyd, insbesondere die kommerziell erhältlichen Phenalkamine Cardolite^{®} NC-541, NC-557, NC-558, NC-566, Lite 2001, Lite 2002, NX-4943, NX-5607 oder NX-5608 (von Cardolite), Aradur^{®} 3440, 3441, 3442 oder 3460 (von Huntsman) oder Beckopox^{®} EH 614, EH 621, EH 624, EH 628 oder EH 629 (von Cytec).

Ein solches weiteres Amin kann die Eigenschaften des Härters in gewünschter Weise beeinflussen, beispielsweise die Viskosität senken, die Reaktivität erhöhen, das Aminwasserstoff-Equivalentgewicht anpassen oder die Verträglichkeit mit dem Epoxidharz verbessern, oder es kann ökonomische Vorteile aufweisen.

Bevorzugt ist das weitere Amin ein Polyamin mit mindestens drei Aminwasserstoffen.

Als weiteres Amin besonders bevorzugt ist N-Benzyl-1,2-propandiamin, N-Benzyl-1,3-bis(aminomethyl)benzol, TMD, H₁₂-MDA, IPDA, 2- oder 4-Methyl-1,3-diaminocyclohexan oder Mischungen davon, 1,3-Bis(aminomethyl)cyclohexan, 1,4-Bis(aminomethyl)cyclohexan, NBDA, MXDA, 2,5-Bis(aminomethyl)furan, 2,5-Bis(aminomethyl)tetrahydrofuran, BHMT, TETA, TEPA, PEHA, DPTA, N4-Amin, DMAPAPA oder ein Polyoxyalkylendi- oder -triamin mit einem mittleren Molekulargewicht im Bereich von 200 bis 500 g/mol, insbesondere Jeffamine^{®} D-230 oder Jeffamine^{®} D-400 oder Jeffamine^{®} T-403.

Als weiteres Amin besonders bevorzugt ist weiterhin ein Addukt aus MXDA und/oder IPDA und/oder TETA mit einem Bisphenol-A- oder Bisphenol-F-Diglycidylether, insbesondere im Molverhältnis zwischen dem Amin-Molekül und den Epoxidgruppen im Bereich von 5:1 bis 50:1.

Als weiteres Amin besonders bevorzugt ist weiterhin ein Addukt aus 1,2-Propylendiamin oder MPMD mit Kresylglycidylether, insbesondere ortho-Kresylglycidylether. Die Adduktierung wird bevorzugt mit einem Überschuss an 1,2-Propylendiamin oder MPMD gegenüber dem Kresylglycidylether durchgeführt und das nicht adduktierte Amin nach der Umsetzung mittels Destillation entfernt.

Es kann vorteilhaft sein, wenn der Härter eine Kombination aus mehreren weiteren Aminen enthält.

Der Härter kann weiterhin mindestens einen Verdünner enthalten, insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und Cardanol (aus Cashewschalen-Öl, enthaltend als Hauptbestandteil 3-(8,11,14-Pentadecatrienyl)phenol, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, alkoxyliertes Phenol, insbesondere ethoxyliertes oder propoxyliertes Phenol, insbesondere 2-Phenoxyethanol, Adipate, Sebacate, Phthalate, Benzoate, organische Phosphor- oder Sulfonsäureester oder Sulfonamide.

Als Verdünner bevorzugt ist Benzylalkohol, 2-Phenoxyethanol, Cardanol, styrolisiertes Phenol, oder phenolgruppenhaltige aromatische Kohlenwasserstoffharze, insbesondere die Novares^{®}-Typen LS 500, LX 200, LA 300 oder LA 700 (von Rütgers).

Als Verdünner besonders bevorzugt ist Cardanol, welches aus nachwachsenden Rohstoffen gewonnen wird.

Bevorzugt enthält der Härter keinen oder nur einen geringen Gehalt an Verdünnern. Bevorzugt enthält der Härter maximal 25 Gewichts-%, besonders bevorzugt maximal 10 Gewichts-%, insbesondere maximal 5 Gewichts-%, Verdünner. Insbesondere ist der Härter frei von Verdünnern. Ein solcher Härter ist besonders geeignet für emissionsarme oder emissionsfreie Epoxidharz-Produkte.

Der Härter kann weitere gegenüber Epoxidgruppen reaktive Substanzen enthalten, beispielsweise Mercaptogruppen aufweisende Verbindungen, insbesondere die Folgenden:
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 oder LP-2; sowie weiterhin bekannt unter dem Markennamen Thioplast^{®} (von Akzo Nobel), insbesondere die Typen G 10, G 112, G 131, G 1, G 12, G 21, G 22, G 44 oder G 4;
- Mercaptan-terminierte Polyoxyalkylen-Ether, erhältlich beispielsweise durch Umsetzung von Polyoxyalkylendi- oder -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF oder 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri(3-mercaptopropionat) oder Glykoldi-(3-mercaptopropionat), oder Veresterungsprodukte von Polyoxyalkylendiolen oder -triolen, ethoxyliertem Trimethylolpropan oder Polyester-Diolen mit Thiocarbonsäuren wie Thioglykolsäure oder 2- oder 3-Mercaptopropionsäure; oder
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) oder Ethandithiol.

Der Härter ist bevorzugt weitgehend frei von Aminen mit einem Molekulargewicht unterhalb von 150 g/mol, insbesondere unterhalb von 120 g/mol. Bevorzugt enthält er weniger als 2 Gewichts-%, insbesondere weniger als 1 Gewichts-%, Amine mit einem Molekulargewicht unterhalb von 120 g/mol, insbesondere unterhalb von 150 g/mol.

Ein solcher Härter ist toxikologisch und geruchlich besonders vorteilhaft und ermöglicht Beschichtungen mit besonders schönen Oberflächen.

Der Härter enthält bezogen auf die reaktiven Bestandteile bevorzugt 50 bis 95 Gewichts-%, insbesondere 60 bis 95 Gewichts-%, Amin der Formel (I). Solche Härter zeichnen sich durch eine niedrige Viskosität aus und ermöglichen Epoxidharz-Zusammensetzungen mit hoher Aushärtungsgeschwindigkeit, kaum Neigung zu Blushing-Effekten und hoher Härte.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend mindestens das beschriebene Reaktionsprodukt aus der Hydrierung von mindestens einem Amin der Formel (II) und/oder ein Addukt davon, wie beschrieben.

Die Härter-Komponente enthält gegebenenfalls mindestens ein weiteres Amin und/oder mindestens einen Beschleuniger, wie vorgängig beschrieben.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.

Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Geeignete Epoxidharze sind insbesondere aromatische Epoxidharze, insbesondere die Glycidylisierungsprodukte von:
- Bisphenol-A, Bisphenol-F oder Bisphenol-A/F, wobei A für Aceton und F für Formaldehyd steht, welche als Edukte zur Herstellung dieser Bisphenole dienten. Im Fall von Bisphenol-F können auch Stellungsisomere vorhanden sein, insbesondere abgeleitet von 2,4'- oder 2,2'-Hydroxyphenylmethan.
- Dihydroxybenzol-Derivaten wie Resorcin, Hydrochinon oder Brenzkatechin;
- weiteren Bisphenolen oder Polyphenolen wie Bis(4-hydroxy-3-methylphenyl)methan, 2,2-Bis(4-hydroxy-3-methylphenyl)propan (Bisphenol-C), Bis-(3,5-dimethyl-4-hydroxyphenyl)methan, 2,2-Bis(3,5-dimethyl-4-hydroxyphenyl)propan, 2,2-Bis(3,5-dibromo-4-hydroxyphenyl)propan, 2,2-Bis(4-hydroxy-3-tert.butylphenyl)propan, 2,2-Bis(4-hydroxyphenyl)butan (Bisphenol-B), 3,3-Bis(4-hydroxyphenyl)pentan, 3,4-Bis(4-hydroxyphenyl)hexan, 4,4-Bis(4-hydroxyphenyl)heptan, 2,4-Bis(4-hydroxyphenyl)-2-methylbutan, 2,4-Bis-(3,5-dimethyl-4-hydroxyphenyl)-2-methylbutan, 1,1-Bis(4-hydroxyphenyl)-cyclohexan (Bisphenol-Z), 1,1-Bis(4-hydroxyphenyl)-3,3,5-trimethylcyclohexan (Bisphenol-TMC), 1,1-Bis(4-hydroxyphenyl)-1-phenylethan, 1,4-Bis[2-(4-hydroxyphenyl)-2-propyl]benzol (Bisphenol-P), 1,3-Bis[2-(4-hydroxyphenyl)-2-propyl]benzol (Bisphenol-M), 4,4'-Dihydroxydiphenyl (DOD), 4,4'-Dihydroxybenzophenon, Bis(2-hydroxynaphth-1-yl)methan, Bis(4-hydroxynaphth-1-yl)methan, 1,5-Dihydroxynaphthalin, Tris(4-hydroxyphenyl)methan, 1,1,2,2-Tetrakis(4-hydroxyphenyl)ethan, Bis(4-hydroxyphenyl)ether oder Bis(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin, 4,4'-Methylendiphenyldi-(N-methyl)amin, 4,4'-[1,4-Phenylenbis(1-methylethyliden)]bisanilin (Bisanilin-P) oder 4,4'-[1,3-Phenylen-bis(1-methylethyliden)]bisanilin (Bisanilin-M).

Weitere geeignete Epoxidharze sind aliphatische oder cycloaliphatische Polyepoxide, insbesondere
- Glycidylether von gesättigten oder ungesättigten, verzweigten oder unverzweigten, zyklischen oder offenkettigen di-, tri- oder tetrafunktionellen C₂-bis C₃₀-Alkoholen, insbesondere Ethylenglykol, Propylenglykol, Butylenglykol, Hexandiol, Octandiol, Polypropylenglykolen, Dimethylolcyclohexan, Neopentylglykol, Dibromoneopentylglykol, Rizinusöl, Trimethylolpropan, Trimethylolethan, Pentaerythrol, Sorbit oder Glycerin, oder alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat oder Triglycidylisocyanurat, oder Umsetzungsprodukte von Epichlorhydrin mit Hydantoin.
- Epoxidharze aus der Oxidation von Olefinen, wie insbesondere Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz in der Harz-Komponente bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Bisphenol-F-Novolaken enthalten.

Die Harz-Komponente kann einen Reaktivverdünner, insbesondere einen mindestens eine Epoxidgruppe aufweisenden Reaktivverdünner, enthalten. Als Reaktivverdünner geeignet sind insbesondere die Glycidylether von ein- oder mehrwertigen Phenolen oder aliphatischen oder cycloaliphatischen Alkoholen, wie insbesondere die bereits genannten Polyglycidylether von Di- oder Polyolen, oder weiterhin Phenylglycidylether, Kresylglycidylether, Guaiacolglycidylether, 4-Methoxyphenylglycidylether, p-n-Butylphenylglycidylether, p-tert.Butylphenylglycidylether, 4-Nonylphenylglycidylether, 4-Dodecylphenylglycidylether, Cardanolglycidylether, Benzylglycidylether, Allylglycidylether, Butylglycidylether, Hexylglycidylether, 2-Ethylhexylglycidylether, oder Glycidylether von natürlichen Alkoholen wie insbesondere C₈- bis C₁₀-Alkylglycidylether oder C₁₂-bis C₁₄-Alkylglycidylether. Die Zugabe eines Reaktivverdünners zum Epoxidharz bewirkt eine Reduktion der Viskosität, und/oder eine Reduktion der Glasübergangstemperatur und/oder der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner, Filmbildehilfsmittel oder Extender, wie insbesondere die bereits genannten Verdünner;
- Reaktivverdünner, insbesondere Epoxidgruppen aufweisende Reaktivverdünner, wie sie vorgängig erwähnt wurden, epoxidiertes Sojaöl oder Leinöl, Acetoacetatgruppen aufweisende Verbindungen, insbesondere acetoacetylierte Polyole, Butyrolakton, Carbonate, Aldehyde, sowie weiterhin Isocyanate oder Reaktivgruppen-aufweisende Silikone;
- Polymere, insbesondere Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere chlorsulfonierte Polyethylene oder Fluor-haltige Polymere, Sulfonamidmodifizierte Melamine oder gereinigte Montan-Wachse;
- anorganische oder organische Füllstoffe, insbesondere gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und/oder Eisenoxide;
- die vorgenannten Beschleuniger;
- Rheologie-Modifizierer, insbesondere Verdicker oder Antiabsetzmittel;
- Haftverbesserer, insbesondere Organoalkoxysilane;
- Stabilisatoren gegen Oxidation, Wärme, Licht oder UV-Strahlung;
- flammhemmende Substanzen, insbesondere Aluminiumhydroxid (ATH), Magnesiumdihydroxid (MDH), Antimontrioxid, Antimonpentoxid, Borsäure (B(OH)₃), Zinkborat, Zinkphosphat, Melaminborat, Melamincyanurat, Ammoniumpolyphosphat, Melaminphosphat, Melaminpyrophosphat, polybromierte Diphenyloxide oder Diphenylether, Phosphate wie insbesondere Diphenylkresylphosphat, Resorcinol-bis(diphenylphosphat), Resorcinoldiphosphat-Oligomer, Tetraphenylresorcinoldiphosphit, Ethylendiamindiphosphat oder Bisphenol-A-bis(diphenylphosphat), Tris(chloroethyl)phosphat, Tris(chloropropyl)phosphat oder Tris(dichloroisopropyl)phosphat, Tris[3-bromo-2,2-bis-(bromomethyl)propyl]phosphat, Tetrabromo-Bisphenol-A, Bis(2,3-dibromo-propylether) von Bisphenol A, bromierte Epoxidharze, Ethylen-bis(tetrabromophthalimid), Ethylen-bis(dibromonorbornandicarboximid), 1,2-Bis(tribromophenoxy)ethan, Tris(2,3-dibromopropyl)isocyanurat, Tribromophenol, Hexabromocyclododecan, Bis(hexachlorocyclopentadieno)cyclooctan oder Chlorparaffine;
- oberflächenaktive Substanzen, insbesondere Netzmittel, Verlaufsmittel, Entlüftungsmittel oder Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und/oder Beschleuniger, insbesondere Salicylsäure und/oder 2,4,6-Tris(dimethylaminomethyl)phenol.

Bevorzugt enthält die Epoxidharz-Zusammensetzung keinen oder nur einen geringen Gehalt an Verdünnern.

Bevorzugt enthält die Epoxidharz-Zusammensetzung maximal 15 Gewichts-%, besonders bevorzugt maximal 5 Gewichts-%, insbesondere maximal 2 Gewichts-%, an Verdünnern. Ganz besonders bevorzugt enthält ist die Epoxidharz-Zusammensetzung frei von Verdünnern.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet schliesslich aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.

Die Harz- und die Härter-Komponente der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.

Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern. Zur Anwendung der Epoxidharz-Zusammensetzung werden die Komponenten kurz vor oder während der Applikation miteinander vermischt. Das Mischungsverhältnis zwischen der Harz- und der Härter-Komponente wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt. Mit der Vermischung der beiden Komponenten beginnt die Aushärtung durch chemische Reaktion, wie vorgängig beschrieben. Die Aushärtung erfolgt typischerweise bei einer Temperatur im Bereich von 0 bis 150 °C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.
Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten und/oder Abblasen, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Faserverbundmatrix für Faserverbundwerkstoffe (Composites) wie insbesondere CFK oder GFK, oder als Vergussmasse oder Giessharz, Dichtstoff, Klebstoff, Belag, Beschichtung, Anstrich, Lack, Versiegelung, Grundierung oder Primer.

Insbesondere verwendbar ist sie als Belag, Beschichtung, Anstrich, Lack, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Insbesondere verwendbar ist sie weiterhin als Klebstoff, insbesondere als Karrosserieklebstoff, Sandwichelementklebstoff, Halbschalenklebstoff für Rotorblätter von Windkraftanlagen, Brückenelementklebstoff oder Verankerungsklebstoff.

Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft wird die beschriebene Epoxidharz-Zusammensetzung als Beschichtung verwendet.

Ein weiterer Gegenstand der Erfindung ist dementsprechend eine Beschichtung, enthaltend eine Epoxidharz-Zusammensetzung wie vorgängig beschrieben.

Als Beschichtung werden dabei flächig aufgebrachte Beläge aller Art verstanden, insbesondere Anstriche, Lacke, Versiegelungen, Grundierungen oder Primer, wie vorgängig beschrieben, oder Bodenbeläge oder Schutzbeschichtungen, insbesondere auch solche für schweren Korrosionsschutz. Besonders vorteilhaft wird die beschriebene Epoxidharz-Zusammensetzung in emissionsarmen Beschichtungen mit Öko-Gütesiegeln, beispielsweise nach Emicode (EC1 Plus), AgBB, DIBt, Der Blaue Engel, AFSSET, RTS (M1) und US Green Building Council (LEED), verwendet.

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende oder thixotropierte Beschichtung auf überwiegend ebene Flächen oder als Anstrich appliziert wird. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 4'000 mPa·s, bevorzugt im Bereich von 300 bis 2'000 mPa·s, besonders bevorzugt im Bereich von 300 bis 1'500 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl.

Bei der Aushärtung entstehen typischerweise weitgehend homogene, glänzende und nichtklebrige Filme von hoher Härte, welche eine gute Haftung zu verschiedensten Substraten aufweisen.

Aus der Anwendung der Epoxidharz-Zusammensetzung entsteht ein Artikel umfassend die ausgehärtete Zusammensetzung aus der Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist geruchsarm und auch mit wenig oder ganz ohne Lösemittel oder Verdünner niedrigviskos. Sie ist geruchs- und emissionsarm, gut verarbeitbar, benetzt die Substrate gut und härtet schnell und störungsfrei aus, auch bei kühlen Umgebungstemperaturen. Bei der Aushärtung entstehen qualitativ hochstehende Epoxidharz-Produkte mit hoher Härte und ebenmässiger, nichtklebriger und glänzender Oberfläche, welche auch unter dem Einfluss von Licht oder UV-Strahlung kaum vergilben. Mit der beschriebenen Epoxidharz-Zusammensetzung sind insbesondere emissionsarme Epoxidharz-Produkte zugänglich, welche die Bedingungen für viele Öko-Gütesiegel erfüllen, gleichzeitig hohen Ansprüchen bezüglich Arbeitssicherheit, Verarbeitungs- und Gebrauchseigenschaften genügen und deren Härter ausgehend von nachwachsenden Rohstoffen herstellbar sind.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

"AHEW" steht für das Aminwasserstoff-Equivalentgewicht.

"EEW" steht für das Epoxid-Equivalentgewicht.

Als "Normklima" wird eine Temperatur von 23±1 °C und eine relative Luftfeuchtigkeit von 50±5% bezeichnet. "NK" steht für "Normklima".

### Beschreibung der Messmethoden:

**Infrarotspektren** (FT-IR) wurden als unverdünnte Filme auf einem mit horizontaler ATR-Messeinheit mit ZnSe-Kristall ausgestatteten FT-IR Gerät 1600 von Perkin-Elmer gemessen; die Absorptionsbanden sind in Wellenzahlen (cm⁻¹) angegeben (Messfenster: 4000-650 cm⁻¹).

**Gaschromatogramme** (GC) wurden gemessen im Temperaturbereich von 60 bis 320 °C mit einer Aufheizrate von 15 °C/min und 10 min Verweilzeit bei 320 °C. Die Injektortemperatur betrug 250 °C. Es wurde eine Zebron ZB-5 Säule verwendet (L = 30 m, ID = 0.25 mm, dj = 0.5 µm) bei einem Gasfluss von 1.5 ml/Min. Die Detektion erfolgte mittels Flammenionisation (FID).

**¹H-NMR-Spektren** wurden auf einem Spektrometer des Typs Bruker Ascend 400 bei 400.14 MHz gemessen; die chemischen Verschiebungen δ sind angegeben in ppm relativ zu Tetramethylsilan (TMS). Echte und Pseudo-Kopplungsmuster wurden nicht unterschieden.

Die **Viskosität** wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm) bei einer Scherrate von 10 s⁻¹ gemessen.

Die **Aminzahl** wurde durch Titration bestimmt (mit 0.1N HCIO₄ in Essigsäure gegen Kristallviolett).

### Herstellung von Amin der Formel (II):

### Amin IPFA: 2,2-Bis(5-aminomethylfuran-2-yl)propan

In einem Rundkolben wurden 510 ml konzentrierte Salzsäure bei 5 °C vorgelegt. Unter gutem Rühren wurden langsam 294.4 g (1.52 mol) Furfurylamin (von Alfa Aesar) zugegeben, wobei die Temperatur der Reaktionsmischung im Bereich von 5 bis 10 °C gehalten wurde. Darauf wurde die Reaktionsmischung mit 352.0 g (3.03 mol) Aceton verdünnt, während 1 h bei 60 °C gerührt, dann auf Raumtemperatur abgekühlt und der pH-Wert mit 20 %iger wässriger KOH-Lösung auf 9 bis 10 eingestellt. Dabei separierte sich ein Öl, welches abgetrennt, mit wasserfreiem Natriumsulfat getrocknet und im Vakuum destilliert wurde (120 °C, 1.3 mbar). Erhalten wurden 105.27 g eines klaren, gelb-braunen Öls mit einer Viskosität von 169 mPa·s bei 20 °C, einer Aminzahl von 465.4 mg KOH/g und einer mittels GC bestimmten Reinheit von > 98 % (Retentionszeit 11.59 min.).

¹H-NMR (CDCl₃): 6.00-6.01 (m, 2 H, 4,4'-Ar-H), 5.90-5.91 (m, 2 H, 3,3'-Ar-H), 3.75 (m, 4 H, Ar-CH₂), 1.61 (m, 6 H, CH₃), 1.40 (m, 4 H, NH₂).

FT-IR: 3364, 3273, 2975, 2933, 1601, 1553, 1443, 1383, 1361, 1261,1239, 1222, 1195, 1143, 1098, 1015, 956, 853, 784, 741, 721.

### Herstellung von Reaktionsprodukten enthaltend Amin der Formel (I):

### Amin IPFA-H1: Reaktionsprodukt enthaltend 2,2-Bis(5-aminomethyltetra-hydrofuran-2-yl)propan

In einem Rundkolben wurden 100.0 g Amin IPFA, hergestellt wie oben beschrieben, in 2 Liter Isopropanol gelöst und bei einem Wasserstoff-Druck von 100 bar, einer Temperatur von 115 °C und einem Fluss von 5 ml/min auf einer kontinuierlich arbeitenden Hydrierapparatur mit Raney-Nickel-Festbettkatalysator hydriert. Darauf wurde die hydrierte Lösung im Vakuum bei 65 °C eingeengt. Das so erhaltene Reaktionsprodukt stellte eine hellgelbe Flüssigkeit mit einer Viskosität von 223 mPa·s bei 20 °C und einer Aminzahl von 421.6 mg KOH/g dar. Anhand des Gaschromatogramms war es weitgehend frei von 2,2-Bis(5-aminomethylfuran-2-yl)propan und enthielt verschiedene Hydrierungsprodukte, wie in Tabelle 1 angegeben. Anhand des ¹H-NMR-Spektrums enthielt das Reaktionsprodukt ca. 70 % 2,2-Bis(5-aminomethyltetrahydrofuran-2-yl)propan und ca. 30 % 2-(5-Aminomethylfuran-2-yl)-2-(5-aminomethyltetra-hydrofuran-2-yl)propan. Dabei liegen diese Amine jeweils in Form von mehreren Diastereomeren mit im Gaschromatogramm unterschiedlichen Retentionszeiten vor.

¹H-NMR (CDCl₃): 5.90-6.04 (m, 0.6* H, Ar H), 3.74-4.00 (m, 3.7* H, cycl.CH-CH₂ und Ar-*CH*₂), 2.48-2.78 (m, 3.6* H, cycl.*CH*₂-NH₂), 1.35-1.93 (mehrere m, 7.2* H, ^{Cy}CH₂ und NH₂), 0.8-1.3 (mehrere m, 11* H, CH₃ und NH₂). (*Integrale auf total 26 H normiert)

FT-IR: 3364, 3273, 2964, 2870, 1595, 1553, 1469, 1380, 1360, 1175, 1057, 1019, 964, 888, 784.

Die Bande bei 1553 cm⁻¹ (ar C-C) ist deutlich kleiner als die entsprechende Bande im FT-IR von Amin IPFA.

### Amin IPFA-H2: destilliertes Reaktionsprodukt enthaltend 2,2-Bis(5-aminome-thyltetrahydrofuran-2-yl)propan

50 g des wie oben hergestellten Amins IPFA-H1 wurden unter Vakuum destilliert (119-120 °C, 0.078-0.044 mbar). Erhalten wurde eine farblose Flüssigkeit mit einer Viskosität von 135 mPa·s bei 20 °C und einer Aminzahl von 432.3 mg KOH/g, welche sich anhand des Gaschromatogramms in der Zusammensetzung nur wenig vom Amin IPFA-H1 unterschied.

FT-IR: 3364, 3273, 2965, 2870, 1595, 1553, 1469, 1380, 1360, 1175, 1057, 1019, 965, 880, 784.

**Tabelle 1: GC-Signale von Amin IPFA-H1 und Amin IPFA-H2**

| | | | | | | | | | | | |
|---|---|---|---|---|---|---|---|---|---|---|---|
| Retentionszeit [min.] | 11.59 | 11.80 | 12.21 | 12.33 | 12.39 | 12.58 | 12.94 | 13.14 | 13.26 | 13.59 | 13.79 |
| Amin **IPFA-H1** [relative Fläche] | 0% | 8.5% | 10.0% | 3.8% | 30.0% | 18.0% | 5.4% | 15.0% | 1.6% | 1.4% | 3.1% |
| Amin **IPFA-H2** [relative Fläche] | 0% | 10.0% | 10.0% | 3.0% | 28.0% | 17.0% | 7.0% | 17.0% | 1.3% | 1.8% | 3.2% |

### Herstellung von Epoxidharz-Zusammensetzungen:

### Beispiele 1 bis 5

Für jedes Beispiel wurden die in der Tabelle 2 angegebenen Inhaltsstoffe in den angegebenen Mengen (in Gewichtsteilen) der Harz-Komponente mittels eines Zentrifugalmischers (SpeedMixer^{™} DAC 150, FlackTek Inc.) vermischt und unter Ausschluss von Feuchtigkeit aufbewahrt.

Anschliessend wurde das in der Tabelle 2 angegebene Amin oder Reaktionsprodukt in der angegebenen Menge mittels des Zentrifugalmischers mit der Harz-Komponente vermischt, zu einer homogenen Flüssigkeit verarbeitet und diese unverzüglich folgendermassen eingesetzt und geprüft:
10 Minuten nach dem Vermischen wurde die Viskosität bei 20°C bestimmt ("**Viskosität (10')**").

Ein erster Film wurde in einer Schichtdicke von 500 µm auf eine Glasplatte aufgezogen und dieser im Normklima gelagert bzw. ausgehärtet.

An diesem Film wurde die **Benetzung der Glasoberfläche** nach 24 h Aushärtung beurteilt. Als "gut" wird die Benetzung bezeichnet, wenn der Film auf der applizierten Fläche geblieben ist. Als "schlecht" wird die Benetzung bezeichnet, wenn der Film sich von der applizierten Fläche wegbewegt hat, indem er sich zusammengezogen hat und die mit dem Film bedeckte Fläche deutlich kleiner als die ursprünglich applizierte ist.

An diesem Film wurde weiterhin die **Königshärte** (Pendelhärte nach König gemäss DIN EN ISO 1522, "Königshärte (NK)") nach 1 Tag (1d), 2 Tagen (2d), 4 Tagen (4d), 7 Tagen (7d) und 14 Tagen (14d) bestimmt. Weiterhin wurde der Aspekt des ausgehärteten Films beurteilt (in der Tabelle 2 mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.

Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend im Normklima gelagert bzw. ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in der Tabelle 2 mit "Aspekt (8°/80%)" bezeichnet), auf die gleiche Weise wie für den Aspekt (NK) beschrieben. An den so ausgehärteten Filmen wurde wiederum die Königshärte bestimmt, jeweils nach 7 Tagen (7d 8°/80%), 9 Tagen (+2d NK), 14 Tagen (+7d NK) und 21 Tagen (+14d NK).

Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet (**Q-Sun (72h)**). Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. Ein hoher ΔE-Wert steht dabei für eine grossen Farbunterschied bzw. eine starke Vergilbung.

Die Resultate sind in der Tabelle 2 angegeben.

Das mit "(Ref.)" bezeichnete Beispiel ist ein Vergleichsbeispiel.

**Tabelle 2: Zusammensetzung und Eigenschaften der Beispiele 1 bis 5.**

| **Beispiel** | | | **1 (Ref.)** | **2** | **3** | **4** | **5** |
|---|---|---|---|---|---|---|---|
| **Harz-Komp.:** | | | | | | | |
| | Araldite^{®} GY-250 ¹ | | 167.2 | 167.2 | 167.2 | 167.2 | 167.2 |
| | Araldite^{®} DY-E ² | | 31.8 | 31.8 | 31.8 | 31.8 | 31.8 |
| **Härter-Komp.:** | | | | | | | |
| | Amin **IPFA** | | 58.5 | - | - | - | - |
| | Amin **IPFA-H1** | | - | 69.6 | 78.7 | - | - |
| Amin **IPFA-H2** | | | - | - | - | 69.6 | 78.7 |
| Viskosität (10') [Pa·s] | | | 1.18 | 1.01 | 0.97 | 0.94 | 0.86 |
| Benetzung der Glasoberfläche | | | schlecht | gut | gut | gut | gut |
| Königshärte [s] | | (1d NK) | 187 | 112 | 158 | 135 | 170 |
| | | (2d NK) | 206 | 174 | 200 | 186 | 203 |
| | | (4d NK) | 213 | 196 | 218 | 207 | 217 |
| | | (7d NK) | 216 | 204 | 221 | 221 | 227 |
| | | (14d NK) | 220 | 216 | 225 | 230 | 231 |
| Aspekt (NK) | | | schön | schön | schön | schön | schön |
| Q-Sun (72h) ΔE | | | 15.7 | 5.7 | 3.8 | 3.8 | 2.4 |
| Königshärte [s] | | (7d 8°/80%) | 51 | 48 | 73 | 45 | 53 |
| | | (+2d NK) | 65 | 108 | 155 | 109 | 116 |
| | | (+7d NK) | 83 | 134 | 184 | 115 | 125 |
| | | (+14d NK) | 87 | 136 | 196 | 119 | 136 |
| Aspekt (8°/80%) | | | klebrig keine | schön 1 | schön 2 | schön 4 | schön 4 |
| Anzahl Markierungen | | | | | | | |

| | | | | | | | |
|---|---|---|---|---|---|---|---|
| ¹ Bisphenol-A-Diglycidylether, EEW ca. 187.5 g/Eq (von Huntsman) ² Monoglycidylether von C₁₂- bis C₁₄-Alkoholen, EEW ca. 290 g/Eq (von Huntsman) | | | | | | | |

## Patentansprüche

1. Reaktionsprodukt aus der Hydrierung von mindestens einem Amin der Formel (II) 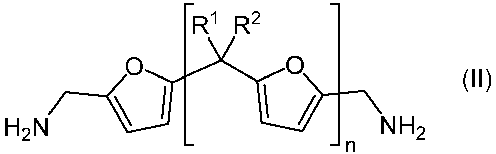 enthaltend ein Amin der Formel (I) 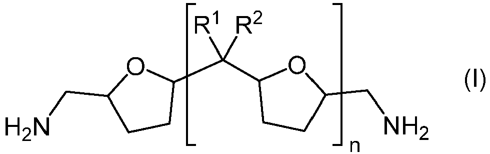 wobei
R¹ und R² entweder
beide für einen Wasserstoff-Rest,
oder unabhängig voneinander jeweils für einen Alkyl-Rest mit 1 bis 8 C-Atomen,
oder zusammen für einen Alkylen-Rest mit 4 oder 5 C-Atomen, welcher zusammen mit dem C-Atom, an welches R¹ und R² gebunden sind, einen Cyclopentyl- oder Cyclohexyl-Rest bilden,
stehen, und
n für 1 oder 2 oder 3 steht, wobei das Reaktionsprodukt einen Gehalt an Amin der Formel (I) von 60 bis 85 Gewichts-% aufweist.

2. Reaktionsprodukt gemäss Anspruch 1, **dadurch gekennzeichnet, dass** es einen Gehalt an Amin der Formel (II) von höchstens 5 Gewichts-% aufweist.

3. Reaktionsprodukt gemäss einem der Ansprüche 1 bis 2, **dadurch gekennzeichnet, dass** es einen Gehalt an Amin der Formel (la) 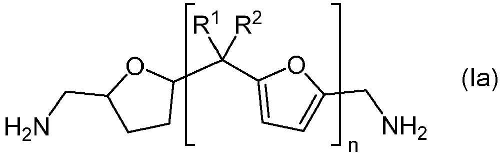 von höchstens 40 Gewichts-% aufweist.

4. Umsetzungsprodukt des Reaktionsprodukts gemäss einem der Ansprüche 1 bis 3 mit einem Epoxid.

5. Verwendung des Reaktionsprodukts gemäss einem der Ansprüche 1 bis 3 und/oder des Umsetzungsprodukts gemäss Anspruch 4, als Bestandteil eines Härters für Epoxidharze.

6. Härter für Epoxidharze enthaltend
- mindestens ein Reaktionsprodukt gemäss einem der Ansprüche 1 bis 3 und/oder mindestens ein Umsetzungsprodukt gemäss Anspruch 4, und
- mindestens ein weiteres Amin, welches nicht der Formel (I) oder (la) entspricht und kein Addukt davon darstellt, und/oder mindestens einen Beschleuniger.

7. Härter gemäss Anspruch 6, **dadurch gekennzeichnet, dass** er maximal 25 Gewichts-% Verdünner enthält.

8. Härter gemäss einem der Ansprüche 6 oder 7, **dadurch gekennzeichnet, dass** er bezogen auf die reaktiven Bestandteile 50 bis 95 Gewichts-% Amin der Formel (I) enthält.

9. Epoxidharz-Zusammensetzung umfassend
- eine Harz-Komponente enthaltend mindestens ein Epoxidharz und
- eine Härter-Komponente enthaltend mindestens ein Reaktionsprodukt gemäss einem der Ansprüche 1 bis 3 und/oder mindestens ein Umsetzungsprodukt gemäss Anspruch 4.

10. Beschichtung enthaltend eine Epoxidharz-Zusammensetzung gemäss Anspruch 9.

11. Ausgehärtete Zusammensetzung erhalten aus der Aushärtung einer Epoxidharz-Zusammensetzung gemäss Anspruch 9 oder einer Beschichtung gemäss Anspruch 10.

## Claims

1. Reaction product from the hydrogenation of at least one amine of formula (II) 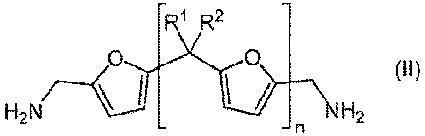 comprising an amine of formula (I) 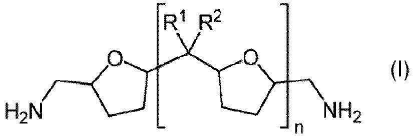 where
R¹ and R² are either
both a hydrogen radical,
or each independently an alkyl radical having 1 to 8 carbon atoms,
or together an alkylene radical having 4 or 5 carbon atoms which, together with the carbon atom to which R¹ and R² are bonded, form a cyclopentyl or cyclohexyl radical,
and
n is 1 or 2 or 3, the reaction product having a content of amine of formula (I) of 60% to 85% by weight.

2. Reaction product according to Claim 1, **characterized in that** it has a content of amine of formula (II) of at most 5% by weight.

3. Reaction product according to either of Claims 1 and 2, **characterized in that** it has a content of amine of formula (Ia) 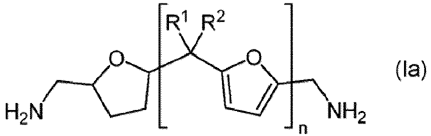 of at most 40% by weight.

4. Conversion product of the reaction product according to any of Claims 1 to 3 with an epoxide.

5. Use of the reaction product according to any of Claims 1 to 3 and/or of the conversion product according to Claim 4 as a constituent of a curing agent for epoxy resins.

6. Curing agent for epoxy resins, comprising
- at least one reaction product according to any of Claims 1 to 3 and/or at least one conversion product according to Claim 4, and
- at least one further amine, which does not correspond to formula (I) or (Ia) and does not represent an adduct thereof, and/or at least one accelerator.

7. Curing agent according to Claim 6, **characterized in that** it comprises a maximum of 25% by weight of thinner.

8. Curing agent according to either of Claims 6 and 7, **characterized in that**, based on the reactive constituents, it comprises 50% to 95% by weight of amine of formula (I).

9. Epoxy resin composition, comprising
- a resin component comprising at least one epoxy resin and
- a curing agent component comprising at least one reaction product according to any of Claims 1 to 3 and/or at least one conversion product according to Claim 4.

10. Coating comprising an epoxy resin composition according to Claim 9.

11. Cured composition obtained from the curing of an epoxy resin composition according to Claim 9 or a coating according to Claim 10.

## Revendications

1. Produit de réaction provenant de l'hydrogénation d'au moins une amine de formule (II) 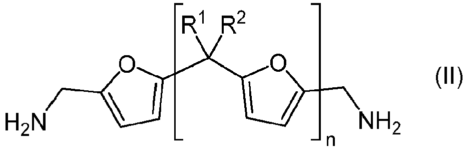 contenant une amine de formule (I) 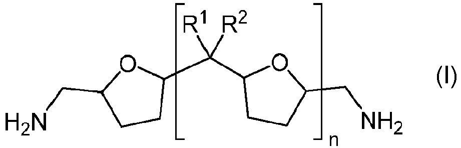 dans lesquelles
R¹ et R²
soit représentent tous les deux un radical hydrogène,
soit représentent, indépendamment l'un de l'autre, à chaque fois un radical alkyle comprenant 1 à 8 atomes de carbone,
soit représentent, conjointement, un radical alkylène comprenant 4 ou 5 atomes de carbone, qui forment, conjointement avec l'atome de C auquel R¹ et R² sont liés, un radical cyclopentyle ou cyclohexyle,
et
n représente 1 ou 2 ou 3, le produit de réaction présentant une teneur en amine de formule (I) de 60 à 85% en poids.

2. Produit de réaction selon la revendication 1, **caractérisé en ce qu'**il présente une teneur en amine de formule (II) d'au plus 5% en poids.

3. Produit de réaction selon l'une des revendications 1 à 2, **caractérisé en ce qu'**il présente une teneur en amine de formule (Ia) 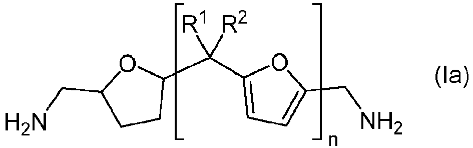 d'au plus 40% en poids.

4. Produit de transformation du produit de réaction selon l'une des revendications 1 à 3 avec un époxyde.

5. Utilisation du produit de réaction selon l'une des revendications 1 à 3 et/ou du produit de transformation selon la revendication 4 comme constituant d'un durcisseur pour résines époxyde.

6. Durcisseur pour résines époxyde contenant
- au moins un produit de réaction selon l'une des revendications 1 à 3 et/ou au moins un produit de transformation selon la revendication 4 et
- au moins une autre amine, qui ne correspond pas à la formule (I) ou (Ia) et qui ne représente pas un produit d'addition de celle-ci et/ou au moins un accélérateur.

7. Durcisseur selon la revendication 6, **caractérisé en ce qu'**il contient au maximum 25% en poids de diluant.

8. Durcisseur selon l'une des revendications 6 ou 7, **caractérisé en ce qu'**il contient, par rapport aux constituants réactifs, 50 à 95% en poids d'amine de formule (I).

9. Composition de résine époxyde comprenant
- un composant de résine, contenant au moins une résine époxyde et
- un composant durcisseur contenant au moins un produit de réaction selon l'une des revendications 1 à 3 et/ou au moins un produit de transformation selon la revendication 4.

10. Revêtement contenant une composition de résine époxyde selon la revendication 9.

11. Composition durcie obtenue à partir du durcissement d'une composition de résine époxyde selon la revendication 9 ou d'un revêtement selon la revendication 10.
